# EUROPÄISCHE PATENTSCHRIFT

(11) **EP 3 195 006 B1**
(45) Veröffentlichungstag und Bekanntmachung des Hinweises auf die Patenterteilung: **09.09.2020**
(21) Anmeldenummer: 15753377.9
(22) Anmeldetag: 24.08.2015
(51) Int. Cl.: G01S 7/527, G01S 15/93, G01S 15/04, G01S 15/10

(54) **VERFAHREN UND VORRICHTUNG ZUM ÖFFNEN EINES FLÜGELELEMENTS EINES KRAFTFAHRZEUGS, SOWIE KRAFTFAHRZEUG**
METHOD AND APPARATUS FOR OPENING A WING ELEMENT OF A MOTOR VEHICLE, AND MOTOR VEHICLE
PROCÉDÉ ET DISPOSITIF D'OUVERTURE D'UN VANTAIL D'UN VÉHICULE AUTOMOBILE ET VÉHICULE AUTOMOBILE

(30) Priorität: 19.09.2014 DE 102014113600
(43) Veröffentlichungstag der Anmeldung: 26.07.2017
(73) Patentinhaber: Valeo Schalter und Sensoren GmbH, 74321 Bietigheim-Bissingen (DE)
(72) Erfinder: HALLEK, Michael, 74321 Bietigheim-Bissingen (DE); THUNERT, Fabian, 74321 Bietigheim-Bissingen (DE); FRAPSAUCE, Alice, 74321 Bietigheim-Bissingen (DE); FUNKE, Steffen, 74321 Bietigheim-Bissingen (DE)
(74) Vertreter: Enge, Sebastian
(86) Internationale Anmeldenummer: PCT/EP2015/069318
(87) Internationale Veröffentlichungsnummer: WO 2016/041738

(56) Entgegenhaltungen:
- DE-A1-102005 023 002
- DE-A1-102010 062 983
- DE-A1-102011 086 431
- DE-A1-102012 024 931
- US-A1- 2013 235 700

## Beschreibung

Die vorliegende Erfindung betrifft ein Verfahren zum Öffnen eines Flügelelements, insbesondere einer Tür, eines Kraftfahrzeugs, bei welchem mittels einer Erfassungseinrichtung ein Vorhandensein eines Objekts in einem Öffnungsbereich, in welchem das Flügelelement beim Öffnen bewegbar ist, erfasst wird und mittels einer Begrenzungseinrichtung eine Bewegung des Flügelelements beim Öffnen in dem Öffnungsbereich in Abhängigkeit von dem Vorhandensein des Objekts begrenzt wird. Ferner betrifft die vorliegende Erfindung eine Vorrichtung zum Öffnen eines Flügelelements eines Kraftfahrzeugs. Schließlich betrifft die vorliegende Erfindung ein Kraftfahrzeug mit einer solchen Vorrichtung.

Vorliegend richtet sich das Interesse insbesondere auf Verfahren bzw. Vorrichtungen zum Öffnen eines Flügelelements eines Kraftfahrzeugs. Ein solches Flügelelement kann beispielsweise eine Tür des Kraftfahrzeugs sein. Aus dem Stand der Technik sind sogenannte Türöffnungsassistenten bekannt, welche mittels einer entsprechenden Erfassungseinrichtung überprüfen können, ob sich ein Objekt in einem Öffnungsbereich der Tür befindet. Falls ein Objekt in dem Öffnungsbereich vorhanden ist, kann die Bewegung der Tür beim Öffnen mit einer Begrenzungseinrichtung, beispielsweise einem entsprechenden Aktor, begrenzt werden. Die Begrenzungseinrichtung kann das Öffnen der Tür soweit begrenzen, dass die Tür nicht mit dem Objekt kollidiert.

Gerade bei der Türöffnungsassistenzfunktion ist es äußerst wichtig, die Höhe eines Objekts zu ermitteln, um zu unterscheiden, ob dieses Objekt von der Tür überschwenkt werden kann oder ob dieses Objekt beim Öffnen der Tür eine Beschädigung der Tür verursachen würde. In diesem Zusammenhang beschreibt die EP 1 002 920 B1 ein automatisches Türöffnungssystem für Kraftfahrzeuge mit einer Sensoreinrichtung zur Erfassung von Objekten in einem vorgegebenen Bereich um das Fahrzeug. Dabei umfasst die Sensoreinrichtung mindestens zwei Antennen zum Bestimmen der Höhe des Objekts, welche auf verschiedenen Höhen am Fahrzeug angeordnet sind.

Ferner sind aus dem Stand der Technik Fahrerassistenzsysteme mit Ultraschallsensoren bekannt. Diese werden beispielsweise in sogenannten Parkhilfesystemen eingesetzt. Darüber hinaus werden die Ultraschallsensoren in immer mehr Funktionen eingebunden, welche sich vom klassischen Einparkvorgang abheben. Neben der funktionsübergreifenden Verwendung dieser Sensoren steigt zum einen die Anzahl der verwendeten Sensoren und zum anderen wird es immer wichtiger, Objekte genauer zu klassifizieren, beispielsweise speziell die Höhe oder die Ausdehnung des Objekts zu bestimmen.

Bei Ultraschallsensoren wird zum Erfassen eines Objekts ein Ultraschall ausgesendet und das von dem Objekt reflektierte Ultraschallsignal in Form zumindest eines Echos wieder empfangen. Dabei sind auch Verfahren bekannt, bei denen anhand von Ultraschallsignalen die Höhe eines Objekts bestimmt wird. Beispielsweise beschreibt die EP 1 643 271 B1 ein Verfahren zum Klassifizieren einer Seitenbegrenzung einer Parklücke für ein Einparksystem eines Kraftfahrzeugs. Hierbei werden die Echosignale eines Ultraschallsensors in Bezug auf die Impulslänge und die Amplitude ausgewertet und klassifiziert. Dabei entspricht eine geringe Impulslänge einer niedrigen Seitenbegrenzung, eine große Impulslänge charakterisiert eine hohe Seitenbegrenzung.

Zudem sind Verfahren bekannt, bei denen zur Unterscheidung eines hohen und eines niedrigen Objekts eine Relation zwischen zwei unmittelbar aufeinanderfolgenden Reflexionen des Ultraschallsignals, welche letzten Endes ins Verhältnis gesetzt werden, bestimmt wird. Ist der zeitliche Unterschied zwischen den beiden Echos beispielsweise gering, kann von einem hohen Objekt ausgegangen werden. Bei einem größeren Abstand zwischen dem ersten und dem zweiten Echo kann in der Regel von einem niedrigen Objekt ausgegangen werden. Hierzu beschreibt die EP 1 910 866 B1 ein Verfahren zur Ermittlung einer Tiefenbegrenzung einer Parklücke mittels Ultraschallsensoren, bei welchem eine Ultraschallwelle ausgesendet wird und die dazugehörigen Echosignale gesammelt werden. Ferner wird eine Streuung und/oder Verteilung der Echosignale bestimmt und in Abhängigkeit davon die Tiefenbegrenzung ermittelt.

Verfahren, bei welchen die Abmessungen und insbesondere die Höhe von Objekten mittels Ultraschallsensoren bestimmt werden, können üblicherweise in einem Detektionsbereich genutzt werden. Dieser Detektionsbereich kann beispielsweise einen Abstand von 50 cm zu dem Ultraschallsensor aufweisen. In einem sogenannten Nahbereich bzw. Bildbereich, der sich zwischen dem Ultraschallsensor und dem Detektionsbereich befindet, verursachen sehr nahe Objekte üblicherweise Mehrfachreflexionen. Hierbei bewegt sich das Ultraschallsignal mehrfach zwischen dem Objekt und dem Ultraschallsensor hin und her. Dies kann dazu führen, dass die Ausschwingzeit des Ultraschallsensors bzw. der Membran des Ultraschallsensors vergrößert wird. Somit wird der Nahbereich des Ultraschallsensors vergrößert und zudem kann der tatsächliche Echoabstand verfälscht werden. Bei herkömmlichen Parkhilfefunktionen ist die Erfassung von Objekten im Detektionsbereich meistens ausreichend, da auf jede Objekthöhe gewarnt wird.

Ferner beschreibt die US 2013/0235700 A1 ein Verfahren zum Erfassen von Objekten mittels eines Ultraschallsensors im Nahbereich. Dabei wird ein Halbleiterbauelement bereitgestellt, welches eine Schaltung zum Bereitstellen eines Nahbereichsindikators in Abhängigkeit von einem von einem Ultraschallsensor empfangenen Signal aufweist. Dabei werden das empfangene Signal und ein hochfrequentes Signal zu einem Summensignal addiert. Anschließend wird das Summensignal mit einem Tiefpass gefiltert. Wenn in dem gefilterten Summensignal Anteile von einem Echo des Ultraschallsignals vorhanden sind, kann der Nahbereichsindikator ausgegeben werden.

Es ist Aufgabe der vorliegenden Erfindung, eine Lösung aufzuzeigen, wie das Öffnen eines Flügelelements der eingangs genannten Art einfacher und zuverlässiger erfolgen kann.

Diese Aufgabe wird erfindungsgemäß durch ein Verfahren, durch eine Vorrichtung sowie durch ein Kraftfahrzeug mit den Merkmalen gemäß den jeweiligen unabhängigen Patentansprüchen gelöst. Vorteilhafte Weiterbildungen der vorliegenden Erfindung sind Gegenstand der abhängigen Patentansprüche, der Beschreibung und der Figuren.

Ein erfindungsgemäßes Verfahren dient zum Öffnen eines Flügelelements eines Kraftfahrzeugs. Das Flügelelement ist insbesondere eine Tür des Kraftfahrzeugs. Bei dem Verfahren wird mittels einer Erfassungseinrichtung ein Vorhandensein eines Objekts in einem Öffnungsbereich, in welchem das Flügelelement beim Öffnen bewegbar ist, erfasst. Zudem wird mittels einer Begrenzungseinrichtung eine Bewegung des Flügelelements beim Öffnen in dem Öffnungsbereich in Abhängigkeit von dem Vorhandensein des Objekts begrenzt. Das Vorhandensein des Objekts wird mittels eines Ultraschallsensors der Erfassungseinrichtung in einem vorbestimmten Nahbereich, welcher sich in dem Öffnungsbereich an den Ultraschallsensor anschließt, anhand eines von dem Ultraschallsensor ausgesendeten und von dem Objekt reflektierten Ultraschallsignals erfasst.

Das Verfahren dient insbesondere zum Unterstützen eines Fahrers beim Öffnen des Flügelelements des Kraftfahrzeugs. Ein solches Flügelelement kann beispielsweise eine Motorhaube, eine Heckklappe und/oder ein Cabrioverdeck sein. Insbesondere ist das Flügelelement eine Tür des Kraftfahrzeugs. Mittels der Erfassungseinrichtung wird überprüft, ob sich ein Objekt in dem Öffnungsbereich des Flügelelements befindet. Der Öffnungsbereich beschreibt den Bereich in der Umgebung des Kraftfahrzeugs, in welchen das Flügelelement beim Öffnen bewegt bzw. verschwenk werden kann. Die Information, ob sich ein Objekt in dem Öffnungsbereich befindet, kann von der Erfassungseinrichtung an eine Steuereinrichtung des Kraftfahrzeugs übertragen werden. Die Steuereinrichtung kann ein Steuergerät (Electronic Control Unit, Ecu) des Kraftfahrzeugs sein. Die Steuereinrichtung kann beispielsweise in Abhängigkeit von dem Signal der Erfassungseinrichtung einen maximalen Öffnungswinkel für das Flügelelement bestimmen. Die Steuereinrichtung kann anhand des bestimmten maximalen Öffnungswinkels ein entsprechendes Steuersignal an die Begrenzungseinrichtung ausgeben. Die Begrenzungseinrichtung kann beispielsweise einen entsprechenden Aktor bzw. eine elektrische Maschine umfassen. Mit der Begrenzungseinrichtung kann die Öffnung des Flügelelements nur so weit ermöglicht werden, dass eine Kollision zwischen dem Flügelelement und dem Objekt verhindert wird.

Vorliegend wird das Vorhandensein des Objekts in dem Öffnungsbereich mittels eines Ultraschallsensors erfasst. Der Ultraschallsensor kann eine Membran umfassen, die mit einem entsprechenden Wandler, beispielsweise einen piezoelektrischen Element, in einer Sendephase zu mechanischen Schwingungen angeregt wird. Im Anschluss an die Sendephase schwingt die Membran des Ultraschallsensors in einer Ausschwingphase aus. Beim Ausschwingen schwingt die Membran üblicherweise in ihrer Resonanzfrequenz. Anschließend kann das von dem Objekt reflektierte Ultraschallsignal als Echo wieder empfangen werden. In einem vorbestimmten Detektionsbereich kann anhand des von dem Ultraschallsensor ausgesendeten Ultraschallsignals und dem von dem Objekt reflektierten Echo anhand der Laufzeit ein Abstand zu dem Objekt zuverlässig bestimmt werden. Dieser Detektionsbereich kann beispielsweise einen Abstand von 50 cm zu dem Ultraschallsensor aufweisen.

Der Ultraschallsensor der Erfassungseinrichtung kann nun auch das Vorhandensein des Objekts in dem Nahbereich bestimmen. Dieser Nahbereich, der auch als Blindbereich bezeichnet werden kann, schließt sich insbesondere direkt an den Ultraschallsensor an. Ausgehend von dem Ultraschallsensor schließt sich an den Nahbereich der Detektionsbereich des Ultraschallsensors an. Der Nahbereich kann nun so vorbestimmt werden, dass das von dem Objekt reflektierte Ultraschallsignal während der Ausschwingphase wieder auf die Membran trifft. Der Nahbereich kann auch so vorbestimmt sein, dass das reflektierte Ultraschallsignal eine vorbestimmte zeitliche Dauer nach der Ausschwingphase auf die Membran des Ultraschallsensors trifft. Anhand des reflektierten Ultraschallsignals kann also auf das Vorhandensein eines Objekts in dem Nahbereich innerhalb des Öffnungsbereichs rückgeschlossen werden. Eine Bestimmung des Abstands zu dem Objekt kann hierbei insbesondere nicht erfolgen. Somit kann der Ultraschallsensor dazu verwendet werden, das Vorhandensein des Objekts im Nahbereich zu bestimmen. Auf diese Weise kann ein Verfahren zum Öffnen eines Flügelelements bereitgestellt werden, bei dem das Objekt mit Hilfe eines Ultraschallsensors auch im Nahbereich bestimmt werden kann.

Bevorzugt ist der Ultraschallsensor an und/oder in dem Flügelelement angeordnet und der Nahbereich wird in Abhängigkeit von einer Position des Ultraschallsensors an und/oder in dem Flügelelement und/oder in Abhängigkeit von Abmessungen des Flügelelements vorbestimmt. Der Nahbereich kann insbesondere über eine zeitliche Dauer nach dem Aussenden des Ultraschallsignals bestimmt werden. Wenn das reflektierte Ultraschallsignal innerhalb dieser vorbestimmten zeitlichen Dauer wieder am Ultraschallsensor bzw. an der Membran eintrifft, kann davon ausgegangen werden, dass sich das Objekt in dem Nahbereich befindet. Der Ultraschallsensor ist dabei direkt an und/oder in dem Flügelelement angeordnet. Beispielsweise kann der Ultraschallsensor in eine Tür integriert sein. Dabei kann der Nahbereich, in welchem das Vorhandensein des Objekts überprüft wird, in Abhängigkeit von der Position in und/oder an dem Flügelelement bestimmt werden. Alternativ oder zusätzlich können die Abmessungen des Flügelelements, also die räumliche Erstreckung des Flügelelements, herangezogen werden, um den Nahbereich zu bestimmen. Beispielsweise kann der Nahbereich derart bestimmt werden, dass dieser zumindest teilweise deckungsgleich mit dem Öffnungsbereich des Flügelelements ist. Somit kann ein Objekt zuverlässig in dem Öffnungsbereich erfasst werden, in welchen das Flügelelement verschwenkt werden kann.

In einer Ausführungsform wird der Nahbereich derart vorbestimmt, dass sich der Nahbereich bis zu einer Position zumindest einer Kante des Flügelelements in einem zumindest teilweise geöffneten Zustand erstreckt. Die Grenzen des Nahbereichs können so bestimmt werden, dass diese zu den Kanten des Flügelelements in dem zumindest teilweise geöffneten Zustand reichen. Im Falle einer Tür kann der Nahbereich beispielsweise derart bestimmt werden, dass dieser bis zu einer Unterkante der Tür reicht. Somit können beispielsweise Objekte zuverlässig erkannt werden, welche mit der Unterkante der Tür kollidieren würden. Objekte, die von der Tür überschwenkt werden können, werden somit nicht berücksichtigt. Der Nahbereich kann auch so bestimmt werden, dass sich der Nahbereich beispielsweise zu zwei Kanten des Flügelelements erstreckt. Auf diese Weise kann zuverlässig eine Kollision zwischen dem Flügelelement und dem Objekt verhindert werden.

Weiterhin ist es vorteilhaft, wenn das Vorhandensein des Objekts anhand eines Vorliegens eines Nahbereichsindikators bestimmt wird, welcher das Empfangen des reflektierten Ultraschallsignals innerhalb einer vorbestimmten zeitlichen Dauer nach dem Aussenden des Ultraschallsignals angibt. Durch die vorbestimmte zeitliche Dauer wird die räumliche Erstreckung des Nahbereichs vorgegeben. Innerhalb dieser vorbestimmten zeitlichen Dauer kann überprüft werden, ob ein von dem Objekt reflektiertes Ultraschallsignal empfangen wird. Ist dies der Fall, kann davon ausgegangen werden, dass sich ein Objekt in dem Nahbereich befindet. Der Nahbereichsindikator kann beispielsweise mit dem in der US 2013/0235700 A1 beschriebenen Halbleiterbauelement realisiert werden. Dort wird der Nahbereichsindikator als Close Proximity Zone Flag (CPF) bezeichnet.

Bevorzugt wird zusätzlich zu dem Vorliegen des Objekts im Nahbereich überprüft, ob zumindest ein Echo des ausgesendeten Ultraschallsignals mittels des Ultraschallsensors empfangen wird. Falls der Nahbereichsindikator angibt, dass sich ein Objekt in dem Nahbereich des Ultraschallsensors befindet, kann überprüft werden, ob zumindest ein Echo des Ultraschallsignals innerhalb der vorbestimmten zeitlichen Dauer erfasst wird. Anhand des Echos des Ultraschallsignals kann ein Abstand zwischen dem Ultraschallsensor und dem Objekt ermittelt werden. Anhand von dem ermittelten Abstand kann das Begrenzungselement zuverlässig angesteuert werden.

Bevorzugt wird bei dem Vorhandensein des Objekts im Nahbereich und einem Nichtempfangen des zumindest einen Echos das Öffnen des Flügelelements derart begrenzt, dass das Flügelelement in einer Geschlossenstellung verbleibt. Zeigt der Nahbereichsindikator an, dass sich ein Objekt in dem Nahbereich befindet und es ist keine Abstandsinformation in Form des Echos vorhanden, folgt daraus, dass das Objekt entweder sehr nah an dem Flügelelement ist oder aber das Objekt niedriger als der Nahbereich des Ultraschallsensors ist. Hierbei kann es aber auch der Fall sein, dass sich das Objekt in dem Öffnungsbereich des Flügelelements befindet. In diesem Fall kann somit das Öffnen der Tür nicht unterstützt werden.

In einer weiteren Ausführungsform wird bei dem Vorhandensein des Objekts im Nahbereich und einem Empfangen zumindest eines Echos anhand des zumindest einen Echos ein Abstand zwischen dem Flügelelement und dem Objekt bestimmt und das Öffnen des Flügelelements wird anhand des bestimmten Abstands begrenzt. Wenn beispielsweise nur ein Echo des Ultraschallsignals empfangen wird, folgt üblicherweise daraus, dass sich das Objekt wahrscheinlich an dem anhand des Echos ermittelten Abstandswert befindet. Dieser Abstand bzw. Abstandswert kann nun herangezogen werden, um die Begrenzungseinrichtung mittels der Steuereinrichtung anzusteuern. Somit kann das Öffnen des Flügelelements derart begrenzt werden, dass eine Kollision zwischen dem Flügelelement und dem Objekt unterbliebt.

In einer weiteren Ausführungsform wird bei dem Vorhandensein des Objekts im Nahbereich und bei dem Empfangen von zumindest zwei Echos eine zeitliche Dauer zwischen einem Aussenden des Ultraschallsignals und einem Empfangen des ersten der zumindest zwei Echos und eine zeitliche Dauer zwischen dem Empfangen des ersten Echos und einem Empfangen eines zweiten Echos der zumindest zwei Echos bestimmt. Anhand der ersten und der zweiten zeitlichen Dauer kann beispielsweise bestimmt werden, ob es sich bei dem zweiten Echo um Mehrfachreflexionen des Ultraschallsignals handelt. Hierbei kann es auch vorgesehen sein, dass beispielsweise mehrere Echos, insbesondere ein drittes und ein viertes Echo, erfasst werden. Auf diese Weise kann zuverlässig bestimmt werden, ob ein Objekt in dem Nahbereich vorhanden ist.

Weiterhin hat es sich als vorteilhaft erwiesen, wenn ein Abstand zwischen dem Flügelelement und dem Objekt anhand des ersten Echos bestimmt wird, falls ein Unterschied zwischen der ersten zeitlichen Dauer und der zweiten zeitlichen Dauer einen vorbestimmten Grenzwert unterschreitet. Insbesondere kann untersucht werden, ob die erste zeitliche Dauer und die zweite zeitliche Dauer im Wesentlichen gleich sind. Wenn beispielsweise zwei Echos vorhanden sind, bei denen das zweite Echo den doppelten Abstand des ersten Echos aufweist, ist es wahrscheinlich, dass das zweite Echo eine Mehrfachreflexion ist und der ermittelte Abstand des ersten Echos dem tatsächlichen Objektabstand entspricht. Sind zwei Echos vorhanden, bei denen das zweite Echo weniger als der doppelte Abstand zu dem ersten Echo entspricht, bedeutet dies, dass das erste Echo nicht vertrauenswürdig ist und der tatsächliche Objektabstand üblicherweise näher als der gemessene Abstand ist. Hierbei befindet sich beispielsweise das tatsächliche, erste Echo innerhalb des blinden Bereichs des Ultraschallsensors und kann nicht erfasst werden. Das kommende Echo stellt eine Mehrfachreflexion dar, welche vom Sensor wiederum als erstes Echo erkannt wird. Das darauffolgende Echo ist wiederum eine zweite Mehrfachreflexion. In diesem Fall kann ein Öffnen der Tür unterbunden werden.

In einer weiteren Ausführungsform wird das Vorhandensein des Objekts zudem in einem sich an den Nahbereich anschließenden Detektionsbereich des Ultraschallsensors innerhalb des Öffnungsbereichs erfasst. Der Ultraschallsensor ist zudem dazu ausgelegt, das Objekt in einem Detektionsbereich zu erfassen. Insbesondere kann anhand der Laufzeit des Ultraschallsignals ein Abstand zwischen dem Ultraschallsensor und dem Objekt bestimmt werden. Der Detektionsbereich schließt sich ausgehend von dem Ultraschallsensor an den Nahbereich an. Auf diese Weise kann der Öffnungsbereich des Flügelelements mit dem Ultraschallsensor zuverlässig auf das Vorhandensein eines Objekts hin überwacht werden.

Eine erfindungsgemäße Vorrichtung zum Öffnen eines Flügelelements, insbesondere einer Tür eines Kraftfahrzeugs, umfasst eine Erfassungseinrichtung zum Erfassen eines Vorhandenseins eines Objekts in einem Öffnungsbereich, in welchem das Flügelelement beim Öffnen bewegbar ist. Zudem umfasst die Vorrichtung eine Begrenzungseinrichtung zum Begrenzen einer Bewegung des Flügelelements beim Öffnen in dm Öffnungsbereich in Abhängigkeit von dem Vorhandensein des Objekts. Die Erfassungseinrichtung weist einen Ultraschallsensor auf, welcher dazu ausgelegt ist, in einen vorbestimmten Nahbereich, welcher sich in dem Öffnungsbereich an den Ultraschallsensor anschließt, anhand eines von dem Ultraschallsensor ausgesendeten und von dem Objekt reflektierten Ultraschallsignals zu erfassen.

Ein erfindungsgemäßes Kraftfahrzeug umfasst eine erfindungsgemäße Vorrichtung und zumindest ein Flügelelement. Das Kraftfahrzeug kann insbesondere als Personenkraftwagen ausgebildet sein. Das Flügelelement ist insbesondere eine Tür, eine Heckklappe, eine Motorhaube und/oder ein Verdeck des Kraftfahrzeugs. Für den Fall, dass das Flügelelement als Verdeck ausgebildet ist, ist das Kraftfahrzeug insbesondere als Cabriolet ausgebildet.

Die mit Bezug auf das erfindungsgemäße Verfahren vorgestellten bevorzugten Ausführungsformen und deren Vorteile gelten entsprechend für die erfindungsgemäße Vorrichtung sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: eine ausschnittsweise Darstellung eines Kraftfahrzeugs mit einer Vorrichtung zum Öffnen eines Flügelelements, insbesondere einer Tür, des Kraftfahrzeugs;
- Fig. 2: das Kraftfahrzeug gemäß Fig. 1, wobei ein Nahbereich und ein Detektionsbereich einer Erfassungseinrichtung der Vorrichtung gezeigt sind;
- Fig. 3: das Kraftfahrzeug gemäß Fig. 2, wobei sich ein Objekt in dem Detektionsbereich der Erfassungseinrichtung befindet;
- Fig. 4: das Kraftfahrzeug gemäß Fig. 2, wobei sich ein Objekt unterhalb des Nahbereichs der Erfassungseinrichtung befindet; und
- Fig. 5: das Kraftfahrzeug gemäß Fig. 2, wobei sich ein Objekt in dem Nahbereich der Erfassungseinrichtung befindet.

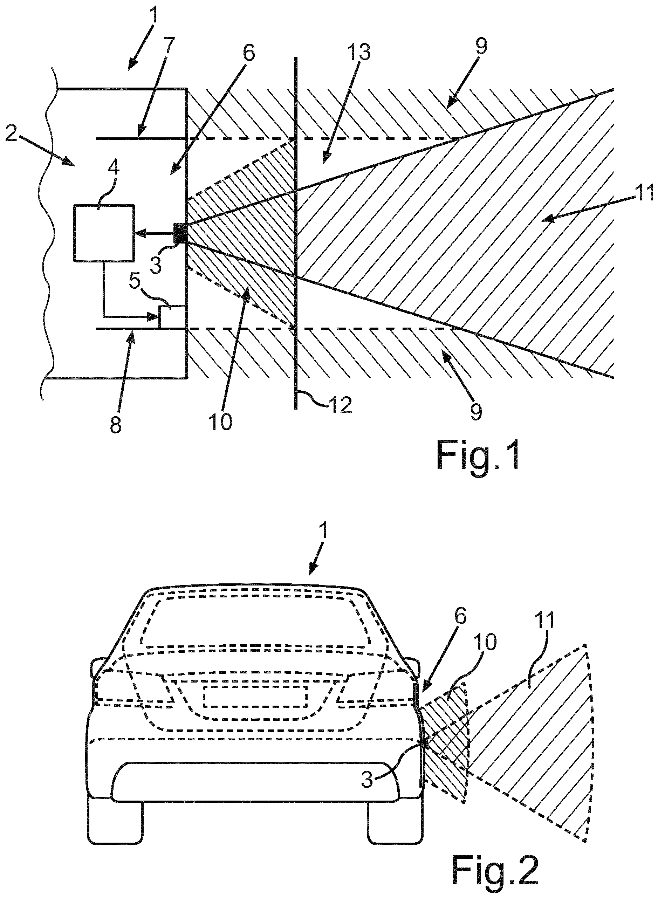

Fig. 1 zeigt eine stark vereinfachte ausschnittsweise Darstellung eines Kraftfahrzeug 1, welches insbesondere ein Personenkraftwagen ist. Das Kraftfahrzeug 1 umfasst eine Vorrichtung 2 zum Öffnen eines Flügelelements 6 des Kraftfahrzeugs 1. Das Flügelelement 6 des Kraftfahrzeugs 1 kann beispielsweise eine Heckklappe, eine Motorhaube oder ein Verdeck sein. In dem vorliegenden Ausführungsbeispiel ist das Flügelelement 6 eine Tür des Kraftfahrzeugs 1. Die Vorrichtung 2 dient zum Unterstützen eines Fahrers beim Öffnen des Flügelelements 6. Insbesondere soll verhindert werden, dass das Flügelelement 6 beim Öffnen mit einem Objekt 14 kollidiert und somit das Flügelelement 6 beschädigt wird.

Die Vorrichtung 2 umfasst eine Erfassungseinrichtung 3, mit welcher ein Öffnungsbereich 13 des Flügelelements 6 erfasst werden kann. Der Öffnungsbereich 13 stellt den Bereich in der Umgebung des Kraftfahrzeugs 1 dar, in welchem das Flügelelement 6 beim Öffnen bewegt bzw. verschwenkt werden kann. Der schraffierte Bereich 9 kennzeichnet vorliegend den Bereich, in welchen das Flügelelement 6 beim Öffnen nicht gelangt.

Die Erfassungseinrichtung 3 ist in dem vorliegenden Ausführungsbeispiel innerhalb des Flügelelements 6 bzw. der Tür angeordnet. Die Erfassungseinrichtung 3 umfasst einen vorliegend nicht näher dargestellten Ultraschallsensor. Der Ultraschallsensor kann beispielsweise eine Membran aufweisen, die mit einem Wandler in einem Sendebetrieb zu mechanischen Schwingungen angeregt wird. Somit kann in dem Sendebetrieb ein Ultraschallsignal ausgesendet werden. Dieses Ultraschallsignal kann von dem Objekt 14 in dem Umgebungsbereich des Kraftfahrzeugs 1 reflektiert werden und wiederum auf die Membran des Ultraschallsensors treffen. Durch das reflektierte Ultraschallsignal wird die Membran zu mechanischen Schwingungen angeregt. Diese können wiederum mit dem Wandler erfasst werden.

Mit der Erfassungseinrichtung 3 kann erfasst werden, ob sich das Objekt 14 in dem Öffnungsbereich 13 des Flügelelements 6 befindet. Diese Information kann an eine Steuereinrichtung 4 des Kraftfahrzeugs 1 übertragen werden. Die Steuereinrichtung 4 kann beispielsweise durch ein Steuergerät (Electronic Control Unit, ECU) des Kraftfahrzeugs 1 gebildet sein. Mittels der Steuereinrichtung 4 kann ein entsprechendes Steuersignal an eine Begrenzungseinrichtung 5 übertragen werden. Die Begrenzungseinrichtung 5 kann ein Öffnen bzw. eine Öffnungsbewegung des Flügelelements 6 bzw. der Tür begrenzen. Die Begrenzungseinrichtung 5 kann einen entsprechenden Aktor, welcher die Bewegung des Flügelelements 6 begrenzt, umfassen.

Der Erfassungseinrichtung 3 bzw. dem Ultraschallsensor ist ein Detektionsbereich 11 zugeordnet, der sich teilweise mit dem Öffnungsbereich 8 überlagert. In dem Detektionsbereich 11 kann anhand der Laufzeit des Ultraschallsignals ein Abstand von der Erfassungseinrichtung 3 zu dem Objekt 14 zuverlässig bestimmt werden. Ferner weist die Erfassungseinrichtung 3 bzw. der Ultraschallsensor einen vorbestimmten Nahbereich 10 auf. Die Linie 12 stellt die Grenze des Nahbereichs 10 dar. In dem Nahbereich 10 kann das Vorhandensein des Objekts 14 anhand des reflektierten Ultraschallsignals erfasst werden. In dem Nahbereich 10 kann das Objekt 14 erfasst werden, selbst wenn das herkömmliche Echolotverfahren keine Abstandsinformation mehr liefern kann. In dem Nahbereich 10 kann es beispielsweise der Fall sein, dass ein Objekt 14 so nahe an dem Ultraschallsensor ist, dass das reflektierte Echo während einer Ausschwingphase, die auf die Sendephase folgt, empfangen wird. Der Nahbereich 10 wird durch eine vorbestimmte zeitliche Dauer definiert, in welcher nach dem Aussenden des Ultraschallsignals reflektierte Signale empfangen werden. Der Nahbereich 10 ist vorliegend anhand der Position der Erfassungseinrichtung 3 in dem Flügelelement 6 definiert. Vorliegend ist der Nahbereich 10 derart bestimmt, dass der Nahbereich 10 in einer zumindest teilweise geöffneten Stellung des Flügelelements 6 sowohl an eine Unterkante 8 als auch an eine Oberkante 7 des Flügelelements 6 grenzt.

Zum Überprüfen des Vorhandenseins des Objekts 14 kann ein sogenannter Nahbereichsindikator herangezogen werden. Hierbei kann beispielweise überprüft werden, ob innerhalb einer vorbestimmten zeitlichen Dauer nach dem Aussenden des Ultraschallsignals mit dem Ultraschallsensor das von dem Objekt reflektierte Ultraschallsignal empfangen wird. Wird innerhalb der vorbestimmten zeitlichen Dauer das reflektierte Ultraschallsignal empfangen, wird der Nahbereichsindikator ausgegeben.

Fig. 2 zeigt das Kraftfahrzeug 1 gemäß Fig. 1, bei welchem sich die Erfassungseinrichtung 3 in dem Flügelelement 6, das vorliegend als Beifahrertür ausgebildet ist, befindet. Vorliegend ist der Übersichtlichkeit halber nur die Erfassungseinrichtung 3 der Vorrichtung 2 gezeigt. Zudem sind der Nahbereich 10 und der Detektionsbereich 11 gezeigt. In dem vorliegenden Beispiel befindet sich kein Objekt 14 in dem Öffnungsbereich 13 der Tür bzw. des Flügelelements 6. Somit wird das Öffnen des Flügelelements 6 durch die Begrenzungseinrichtung 5 nicht begrenzt.

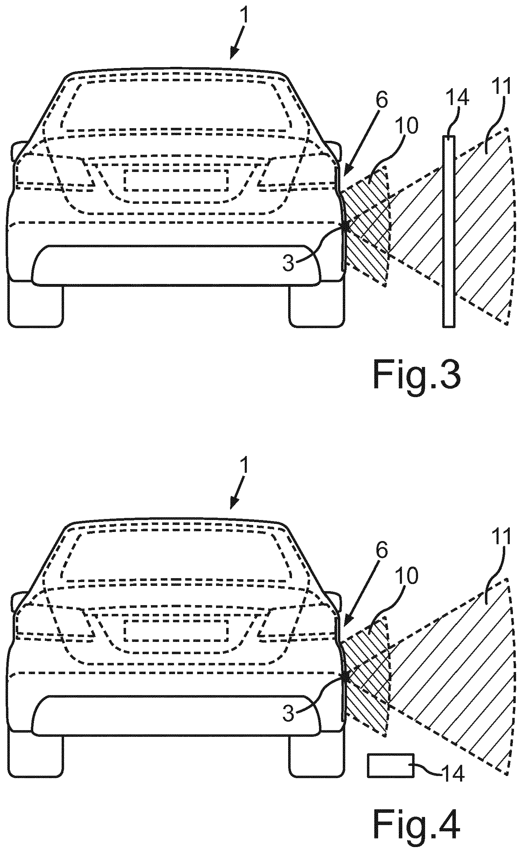

Fig. 3 zeigt das Kraftfahrzeug 1 gemäß Fig. 2, wobei sich ein Objekt 14 in dem Detektionsbereich 11 der Erfassungseinrichtung 3 bzw. des Ultraschallsensors befindet. In dem Detektionsbereich 11 kann der Abstand zwischen dem Objekt 14 und der Erfassungseinrichtung 3 bestimmt werden. Dabei kann die Begrenzungseinrichtung 5 mittels der Steuereinrichtung 4 in Abhängigkeit von dem erfassten Abstand angesteuert werden. Dabei kann die Begrenzungseinrichtung 5 insbesondere derart angesteuert werden, dass das Flügelelement 6 nur so weit geöffnet werden kann, dass eine Kollision zwischen dem Flügelelement 6 und dem Objekt 14 unterbleibt. Durch das Vorbestimmen des Nahbereichs 10 bedarf es keiner Bestimmung der Höhe des Objekts 14.

Fig. 4 zeigt das Kraftfahrzeug 1 gemäß Fig. 2, bei welchem sich das Objekt 14 unterhalb des Nahbereichs 10 befindet. In diesem Fall wird in dem Detektionsbereich 11 kein Objekt 14 erfasst. Zudem wird in dem Nahbereich 10 kein Objekt 14 erfasst, da der Bereich der Nahbereichserkennung bis mindestens zu der Unterkante 8 der Tür reicht. Hier kann davon ausgegangen werden, dass entweder kein Objekt 14 oder ein niedriges Objekt 14, welches von der Tür überschwenkt werden kann, vorhanden ist. Die Tür bzw. das Flügelelement 6 kann somit vollständig geöffnet werden. Die Begrenzungseinrichtung 5 begrenzt also das Öffnen des Flügelelements 6 nicht.

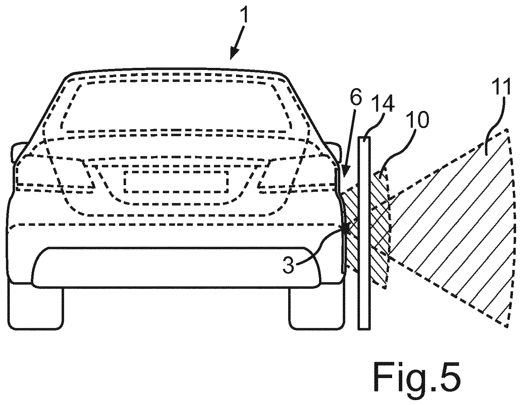

Fig. 5 zeigt das Kraftfahrzeug 1 gemäß Fig. 2, bei dem sich das Objekt 14 in dem Nahbereich 10 befindet. Hier zeigt der Indikator der Nahbereichserkennung das Objekt 14 an. Hier kann davon ausgegangen werden, dass sich ein hohes Objekt 14 unmittelbar vor dem Flügelelement 6 bzw. der Tür befindet. Ist nun keine Abstandsinformation, das heißt kein Echo des Ultraschallsignals vorhanden, folgt daraus, dass das Objekt 14 entweder sehr nahe an dem Flügelelement 6 ist oder das Objekt 14 niedriger als der Detektionsbereich 11 oder der Nahbereich 10 ist. In diesem Fall wird das Öffnen des Flügelelements 6 nicht unterstützt.

Für den Fall, dass eine Abstandsinformation, also ein Echo des Ultraschallsignals empfangen wird, bedarf es einer Prüfung auf dessen Gültigkeit. Ist nur ein Echo vorhanden, folgt daraus, dass sich das Objekt 14 wahrscheinlich an dem ermittelten Abstandswert befindet. Das Öffnen des Flügelelements 6 kann in Abhängigkeit von dem ermittelten Abstandswert erfolgen. Sind zwei Echos vorhanden, bei denen das zweite Echo den doppelten Abstand des ersten Echos aufweist, ist es wahrscheinlich, dass das zweite Echo eine Mehrfachreflexion ist und der ermittelte Abstand des ersten Echos dem tatsächlichen Objektabstand entspricht. Es könnte auch ein drittes oder ein viertes Echo auftreten, welche wiederum ein Vielfaches des ersten Echoabstandes ist.

Sind zwei Echos vorhanden, bei denen das zweite Echo weniger als der doppelte Abstand zum ersten Echo ist, bedeutet dies, dass das erste Echo nicht vertrauenswürdig ist. Der tatsächliche Objektabstand ist näher als der gemessene Abstand. Hier befindet sich das tatsächliche, erste Echo innerhalb des blinden Bereichs des Ultraschallsensors und kann nicht erfasst werden. Das kommende Echo stellt eine Mehrfachreflexion dar, welche vom Ultraschallsensor wiederum als erstes Echo erkannt wird. Das darauffolgende Echo ist wiederum die zweite Mehrfachreflexion. In diesem Fall wird ein Öffnen des Flügelelements 6 mittels der Begrenzungseinrichtung 5 unterbunden.

Mit der Vorrichtung 2 kann der Fahrer beim Öffnen des Flügelelements, insbesondere einer Tür, zuverlässig unterstützt werden. Hierdurch wird eine einfache Logik bereitgestellt, welche ohne eine Historie von Informationen auskommt. Die Vorrichtung 2 ist unmittelbar nach dem Aktivieren der Zündung des Kraftfahrzeugs 1 anwendbar. Zudem ist die Vorrichtung unabhängig von der Anzahl der verwendeten Erfassungseinrichtungen 3 bzw. Ultraschallsensoren. Die Vorrichtung 2 ist weiterhin unabhängig von der Ansteuerungsreihenfolge der Ultraschallsensoren im System.

## Patentansprüche

1. Verfahren zum Öffnen eines Flügelelements (6), insbesondere einer Tür, eines Kraftfahrzeugs (1), bei welchem mittels einer Erfassungseinrichtung (3) ein Vorhandensein eines Objekts (14) in einem Öffnungsbereich (13), in welchem das Flügelelement (6) beim Öffnen bewegbar ist, erfasst wird und mittels einer Begrenzungseinrichtung (5) eine Bewegung des Flügelelements (6) beim Öffnen in dem Öffnungsbereich (13) in Abhängigkeit von dem Vorhandensein des Objekts (14) begrenzt wird,
**dadurch gekennzeichnet, dass**
das Vorhandensein des Objekts (14) mittels eines Ultraschallsensors der Erfassungseinrichtung (3) in einem vorbestimmten Nahbereich (10), welcher sich in dem Öffnungsbereich (13) an den Ultraschallsensor anschließt, anhand eines von dem Ultraschallsensor ausgesendeten und von dem Objekt (14) reflektierten Ultraschallsignals erfasst wird , und dass zusätzlich zu dem Vorhandensein des Objekts (14) im Nahbereich (10) überprüft wird, ob zumindest ein Echo des ausgesendeten Ultraschallsignals mittels des Ultraschallsensors empfangen wird, und dass
bei dem Vorhandensein des Objekts (14) im Nahbereich (10) und einem Nichtempfangen des zumindest einen Echos das Öffnen des Flügelelements (6) derart begrenzt wird, dass das Flügelelement (6) in einer Geschlossenstellung verbleibt, und/oder dass bei dem Vorhandensein des Objekts (14) im Nahbereich (10) und einem Empfangen des zumindest einen Echos anhand des zumindest einen Echos ein Abstand zwischen dem Flügelelement (6) und dem Objekt (14) bestimmt wird und das Öffnens des Flügelelements (6) anhand des bestimmten Abstands begrenzt wird.

2. Verfahren nach Anspruch 1,
**dadurch gekennzeichnet, dass**
der Ultraschallsensor an und/oder in dem Flügelelement (6) angeordnet ist und der Nahbereich (10) in Abhängigkeit von einer Position des Ultraschallsensor an und/oder in dem Flügelelement (6) und/oder in Abhängigkeit von Abmessungen des Flügelelements (6) vorbestimmt wird.

3. Verfahren nach Anspruch 2,
**dadurch gekennzeichnet, dass**
der Nahbereich (10) derart vorbestimmt wird, dass sich der Nahbereich (10) bis zu einer Position zumindest einer Kante (7, 8) des Flügelelements (6) in einem zumindest teilweise geöffneten Zustand des Flügelelements (6) erstreckt.

4. Verfahren nach einem der vorhergehenden Ansprüche,
**dadurch gekennzeichnet, dass**
das Vorhandenseins des Objekts (14) anhand eines Vorliegens eines Nahbereichsindikators bestimmt wird, welcher das Empfangen des reflektierten Ultraschallsignal innerhalb einer vorbestimmten zeitlichen Dauer nach dem Aussenden des Ultraschallsignals angibt.

5. Verfahren nach einem der vorhergehenden Ansprüche ,
**dadurch gekennzeichnet, dass**
bei dem Vorhandensein des Objekts (14) im Nahbereich (10) und bei einem Empfangen von zumindest zwei Echos eine erste zeitliche Dauer zwischen dem Aussenden des Ultraschallsignals und einem Empfangen eines ersten der zumindest zwei Echos und eine zweite zeitliche Dauer zwischen dem Empfangen des ersten Echos und einem Empfangen eines zweiten der zumindest zwei Echos bestimmt werden.

6. Verfahren nach Anspruch 5,
**dadurch gekennzeichnet, dass**
ein Abstand zwischen dem Flügelelement (6) und dem Objekt (14) anhand des ersten Echos bestimmt wird, falls ein Unterschied zwischen der ersten zeitlichen Dauer und der zweiten zeitlichen Dauer einen vorbestimmten Grenzwert unterschreitet.

7. Verfahren nach einem der vorhergehenden Ansprüche,
**dadurch gekennzeichnet, dass**
das Vorhandensein des Objekts (14) zudem in einem sich an den Nahbereich (10) anschließenden Detektionsbereich (10) des Ultraschallsensors innerhalb des Öffnungsbereichs (13) erfasst wird.

8. Vorrichtung (2) zum Öffnen eines Flügelelements (6), insbesondere einer Tür, eines Kraftfahrzeugs (1), mit einer Erfassungseinrichtung (3) zum Erfassen eines Vorhandenseins eines Objekts (14) in einem Öffnungsbereich (13), in welchem das Flügelelement (6) beim Öffnen bewegbar ist, mit einer Begrenzungseinrichtung (5) zum Begrenzen einer Bewegung des Flügelelements (6) beim Öffnen in dem Öffnungsbereich (13) in Abhängigkeit von dem Vorhandensein des Objekts (14),
**dadurch gekennzeichnet, dass**
die Erfassungseinrichtung (3) einen Ultraschallsensors aufweist, welcher dazu ausgelegt ist, in einem vorbestimmten Nahbereich (10), welcher sich in dem Öffnungsbereich (13) an den Ultraschallsensor anschließt, anhand eines von dem Ultraschallsensor ausgesendeten und von dem Objekt (14) reflektierten Ultraschallsignals zu erfassen, und dass die die Erfassungseinrichtung (3) dazu ausgelegt ist, zusätzlich zu dem Vorhandensein des Objekts (14) im Nahbereich (10) zu überprüfen, ob zumindest ein Echo des ausgesendeten Ultraschallsignals mittels des Ultraschallsensors empfangen wird, und dass
bei dem Vorhandensein des Objekts (14) im Nahbereich (10) und einem Nichtempfangen des zumindest einen Echos die Begrenzungseinrichtung (5) dazu ausgelegt ist, das Öffnen des Flügelelements (6) derart zu begrenzen, dass das Flügelelement (6) in einer Geschlossenstellung verbleibt, und/oder dass bei dem Vorhandensein des Objekts (14) im Nahbereich (10) und einem Empfangen des zumindest einen Echos die Erfassungseinrichtung dazu ausgelegt ist, anhand des zumindest einen Echos einen Abstand zwischen dem Flügelelement (6) und dem Objekt (14) zu bestimmen und die Begrenzungseinrichtung (5) dazu ausgelegt ist, das Öffnens des Flügelelements (6) anhand des bestimmten Abstands zu begrenzen.

9. Kraftfahrzeug (1) mit einer Vorrichtung (2) nach Anspruch 8 und zumindest einem Flügelelement (6).

10. Kraftfahrzeug (1) nach Anspruch 9,
**dadurch gekennzeichnet, dass**
das Flügelelement (6) eine Tür, eine Heckklappe, eine Motorhaube und/oder ein Verdeck des Kraftfahrzeugs (1) ist.

## Claims

1. Method for opening a wing element (6), in particular a door, of a motor vehicle (1), in which the presence of an object (14) in an opening region (13) in which the wing element (6) can be moved during the opening process is sensed by means of a sensing apparatus (3), and a movement of the wing element (6) during the opening in the opening region (13) is limited by a limiting apparatus (5) as a function of the presence of the object (14),
**characterized in that**
the presence of the object (14) is sensed by means of an ultrasonic sensor of the sensing apparatus (3) in a predetermined close area (10) which adjoins the ultrasonic sensor in the opening region (13), on the basis of an ultrasonic signal which is emitted by the ultrasonic sensor and reflected by the object (14), and **in that** in addition to the presence of the object (14) in the close area (10) is checked, whether at least one echo of the emitted ultrasonic signal is received by means of the ultrasonic sensor, and **in that**
the object (14) is present in the close area (10) and the at least one echo is not received, the opening of the wing element (6) is limited in such a way that the wing element (6) remains in a closed position, and/or **in that** the object (14) is present in the close area (10) and the at least one echo is received, a distance between the wing element (6) and the object (14) is determined on the basis of the at least one echo and the opening of the wing element (6) is limited on the basis of the determined distance.

2. Method according to Claim 1,
**characterized in that**
the ultrasonic sensor is arranged on and/or in the wing element (6), and the close area (10) is predetermined as a function of a position of the ultrasonic sensor on and/or in the wing element (6) and/or as a function of dimensions of the wing element (6).

3. Method according to Claim 2,
**characterized in that**
the close area (10) is predetermined in such a way that the close area (10) extends up to a position of at least one edge (7, 8) of the wing element (6) in an at least partially opened state of the wing element (6).

4. Method according to one of the preceding claims,
**characterized in that**
the presence of the object (14) is determined on the basis of the presence of a close area indicator which specifies the reception of the reflected ultrasonic signal within a predetermined duration after outputting of the ultrasonic signal.

5. Method according to one of the preceding claims,
**characterized in that**
when the object (14) is present in the close area (10) and when at least two echos are received, a first duration between the emission of the ultrasonic signal and reception of a first of the at least two echos and a second duration between the reception of the first echo and reception of the second of the at least two echos are determined.

6. Method according to Claim 5,
**characterized in that**
a distance between the wing element (6) and the object (14) is determined on the basis of the first echo if a difference between the first duration and the second duration undershoots a predetermined limiting value.

7. Method according to one of the preceding claims, **characterized in that**
the presence of the object (14) is additionally sensed in a detection area (10), adjoining the close area (10) of the ultrasonic sensor within the opening area (13).

8. Device (2) for opening a wing element (6), in particular a door, of a motor vehicle (1), having a sensing device (3) for sensing the presence of an object (14) in an opening area (13) in which the wing element (6) can be moved during the opening, having a limiting device (5) for limiting a movement of the wing element (6) during the opening in the opening area (13) as a function of the presence of the object (14),
**characterized in that**
the sensing device (3) has an ultrasonic sensor which is configured to sense, in a predetermined close area (10) which adjoins the ultrasonic sensor in the opening area (13), on the basis of an ultrasonic signal which is emitted by the ultrasonic sensor and is reflected by the object (14), and **in that** the sensing device (3) is configured to check, in addition to the presence of the object (14) in the close area (10), whether at least one echo of the ultrasonic signal is received by means of the ultrasonic sensor, and **in that** when the object (14) is present in the close area (10) and the at least one echo is not received, the limiting device (5) is configured to limit the opening of the wing element (6) in such a way that the wing element (6) remains in a closed position, and/or **in that** the object (14) is present in the close area (10) and the at least one echo is received, the sensing device is configured to determine, on the basis of the at least one echo, a distance between the wing element (6) and the object (14), and the limiting device (5) is configured to limit the opening of the wing element (6) on the basis of the determined distance.

9. Motor vehicle (1) having a device (2) according to Claim 8 and at least one wing element (6).

10. Motor vehicle (1) according to Claim 9,
**characterized in that**
the wing element (6) is a door, a tailgate, a hood and/or a cover of the motor vehicle (1).

## Revendications

1. Procédé pour ouvrir un élément battant (6), notamment une portière, d'un véhicule automobile (1), avec lequel une présence d'un objet (14) dans une zone d'ouverture (13), dans laquelle peut être déplacé l'élément battant (6) lors de l'ouverture, est détectée au moyen d'un dispositif de détection (3) et un mouvement de l'élément battant (6) lors de l'ouverture dans la zone d'ouverture (13) est limité en fonction de la présence de l'objet (14) au moyen d'un dispositif de limitation (5),
**caractérisé en ce que**
la présence de l'objet (14) est détectée au moyen d'un capteur à ultrasons du dispositif de détection (3) dans une zone de proximité (10) prédéterminée, laquelle se rattache au capteur à ultrasons dans la zone d'ouverture (13), à l'aide d'un signal ultrasonore émis par le capteur à ultrasons et réfléchi par l'objet (14), et **en ce qu'**en plus de la présence de l'objet (14) dans la zone de proximité (10), un contrôle est effectué de la réception au moyen du capteur à ultrasons d'au moins un écho du signal ultrasonore émis, et **en ce que** lors de la présence de l'objet (14) dans la zone de proximité (10) et d'une absence de réception de l'au moins un écho, l'ouverture de l'élément battant (6) est limitée de telle sorte que l'élément battant (6) demeure dans une position fermée, et/ou **en ce que** lors de la présence de l'objet (14) dans la zone de proximité (10) et d'une réception de l'au moins un écho, une distance entre l'élément battant (6) et l'objet (14) est déterminée à l'aide de l'au moins un écho et l'ouverture de l'élément battant (6) est limitée à l'aide de la distance déterminée.

2. Procédé selon la revendication 1, **caractérisé en ce que** le capteur à ultrasons est disposé sur et/ou dans l'élément battant (6) et la zone de proximité (10) est prédéterminée en fonction d'une position du capteur à ultrasons sur et/ou dans l'élément battant (6) et/ou en fonction des dimensions de l'élément battant (6).

3. Procédé selon la revendication 2, **caractérisé en ce que** la zone de proximité (10) est prédéterminée de telle sorte qu'au moins un bord (7, 8) de l'élément battant (6) dans un état au moins partiellement ouvert de l'élément battant (6) s'étend dans la zone de proximité (10) jusqu'à une position donnée.

4. Procédé selon l'une des revendications précédentes, **caractérisé en ce que** la présence de l'objet (14) est déterminée à l'aide d'une présence d'un indicateur de zone de proximité, lequel indique la réception du signal ultrasonore réfléchi au sein d'une durée temporelle prédéterminée après l'émission du signal ultrasonore.

5. Procédé selon l'une des revendications précédentes, **caractérisé en ce que** lors de la présence de l'objet (14) dans la zone de proximité (10) et lors de la réception d'au moins deux échos, une première durée temporelle entre l'émission du signal ultrasonore et une réception d'un premier des au moins deux échos et une deuxième durée temporelle entre la réception du premier écho et une réception d'un deuxième des au moins deux échos sont déterminées.

6. Procédé selon la revendication 5, **caractérisé en ce qu'**une distance entre l'élément battant (6) et l'objet (14) est déterminée à l'aide du premier écho dans le cas où une différence entre la première durée temporelle et la deuxième durée temporelle est inférieure à une valeur limite prédéterminée.

7. Procédé selon l'une des revendications précédentes, **caractérisé en ce que** la présence de l'objet (14) est en plus détectée dans une zone de détection (10) du capteur à ultrasons, qui se rattache à la zone de proximité (10), à l'intérieur de la zone d'ouverture (13).

8. Arrangement (2) pour ouvrir un élément battant (6), notamment une portière, d'un véhicule automobile (1), comprenant un dispositif de détection (3) destiné à détecter une présence d'un objet (14) dans une zone d'ouverture (13), dans laquelle peut être déplacé l'élément battant (6) lors de l'ouverture, comprenant un dispositif de limitation (5) destiné à limiter un mouvement de l'élément battant (6) lors de l'ouverture dans la zone d'ouverture (13) en fonction de la présence de l'objet (14),
**caractérisé en ce que**
le dispositif de détection (3) possède un capteur à ultrasons qui est conçu pour détecter dans une zone de proximité (10) prédéterminée, laquelle se rattache au capteur à ultrasons dans la zone d'ouverture (13), à l'aide d'un signal ultrasonore émis par le capteur à ultrasons et réfléchi par l'objet (14), et **en ce que** le dispositif de détection (3) est conçu pour, en plus de la présence de l'objet (14) dans la zone de proximité (10), contrôler si au moins un écho du signal ultrasonore émis est reçu au moyen du capteur à ultrasons, et **en ce que**
lors de la présence de l'objet (14) dans la zone de proximité (10) et d'une absence de réception de l'au moins un écho, le dispositif de limitation (5) et conçu pour limiter l'ouverture de l'élément battant (6) de telle sorte que l'élément battant (6) demeure dans une position fermée, et/ou **en ce que** lors de la présence de l'objet (14) dans la zone de proximité (10) et d'une réception de l'au moins un écho, le dispositif de détection est conçu pour déterminer une distance entre l'élément battant (6) et l'objet (14) à l'aide de l'au moins un écho, et le dispositif de limitation (5) est conçu pour limiter l'ouverture de l'élément battant (6) à l'aide de la distance déterminée.

9. Véhicule automobile (1) comprenant un arrangement (2) selon la revendication 8 et au moins un élément battant (6).

10. Véhicule automobile (1) selon la revendication 9, **caractérisé en ce que** l'élément battant (6) est une portière, un hayon, un capot de moteur et/ou une capote du véhicule automobile (1).
